# EUROPÄISCHE PATENTSCHRIFT

(11) **EP 1 031 603 B1**
(45) Veröffentlichungstag und Bekanntmachung des Hinweises auf die Patenterteilung: **01.12.2004**
(21) Anmeldenummer: 00102814.1
(22) Anmeldetag: 11.02.2000
(51) Int. Cl.: C08K 5/00, C08L 83/07, C08G 77/38, C08K 3/00

(54) **Synergistisches Katalysatorsystem und Verfahren zur Durchführung von Hydrosilylierungsreaktionen**
Synergistic catalyst system and method for carrying out hydrosilylation reactions
Système catalytique synergique et méthode pour réaliser des réactions d'hydrosilylation

(30) Priorität: 24.02.1999 DE 19907814
(43) Veröffentlichungstag der Anmeldung: 30.08.2000
(73) Patentinhaber: Goldschmidt AG, 45127 Essen (DE)
(72) Erfinder: Klein, Klaus-Dieter, Dr., 45468 Mülheim (DE); Knott, Wilfried, Dr., 45141 Essen (DE); Windbiel, Dagmar, 45289 Essen (DE)

(56) Entgegenhaltungen:
- EP-A- 0 151 991
- EP-A- 0 484 755
- WO-A-98/40043

## Beschreibung

Die Erfindung betrifft ein synergistisches Katalysatorsystem und ein Verfahren zur Durchführung von Hydrosilylierungsreaktionen.

Modifizierte Siloxane, insbesondere organomodifizierte Siloxane gewinnen aufgrund ihres weit definierbaren Eigenschaftsprofils zunehmend an Bedeutung.

Eine grundlegende Synthesestrategie zur Erzeugung dieser Verbindungsklasse bedient sich der übergangsmetall-katalysierten Anlagerung SiH-Gruppen-tragender Silicone an olefinische Verbindungen (Hydrosilylierung). Aus der Vielzahl der nach diesem Verknüpfungsprinzip durchführbaren Reaktionen grenzen sich diejenigen ab, deren Ziel darin liegt, Siloxane mit sehr hohen Modifizierungsgraden, d. h., z. B. Derivate des Poly(methylwasserstoff)siloxans herzustellen.

Eingedenk der kräftigen Exothermie bei SiC-verknüpfenden Reaktionen repräsentieren Umsetzungen von Poly(methylwasserstoff)-siloxanen, insbesondere in Kombination mit sehr reaktionsfähigen Olefinen bei der im großen Maßstab betriebenen, industriellen Fertigung organomodifizierter Siloxane ein erhebliches Gefahrenpotential.

Erschwerend wirkt sich bei diesen durch ein hohes thermodynamisches Potential gekennzeichneten Hydrosilylierungsreaktionen eine, durch partielle Desaktivierung des eingesetzten Katalysators hervorgerufene, Schwankung der Reaktionskinetik aus. Die partielle Desaktivierung homogenkatalytisch wirksamer Verbindungen läßt sich häufig bereits an der Abscheidung dunkelgefärbter Edelmetallderivate aus den Hydrosilylierungsansätzen erkennen.

Von zentraler Bedeutung für eine sichere technische Durchführung ist daher eine zeitadäquat-zügige Umsetzung der Reaktanden. Anderenfalls führt eine deutlich verringerte Reaktionsgeschwindigkeit zum Aufbau unerwünschter Eduktkonzentrationen, die dann bei später wiedereinsetzender Reaktion schwer kontrollierbare Betriebszustände hervorrufen (Exothermieschub).

Über den Sicherheitsaspekt hinausgehend, hängt die bei derartigen Umsetzungen erzielbare Produktqualität auch von der Vermeidung unkontrollierter Eduktkumulation ab, da man beispielsweise die Neigung zur Gelbildung als unerwünschte Nebenreaktion bei der Hydrosilylierung wasserstoffreicher SiH-Siloxane kennt.

Die Aufrechterhaltung einer gleichbleibend hohen katalytischen Aktivität über den gesamten Reaktionsverlauf definiert somit die technische Aufgabe, die es zu lösen gilt.

Erstaunlicherweise wurde nun gefunden, daß die Kombination aus einer Platin- und einer Rutheniumverbindung (z. B.: H₂PtCl₆ mit RuCl₃ x nH₂O) ein Katalysatorsystem darstellt, daß die sichere, zeitadäquat-zügige Umsetzung SiH-reicher Wasserstoffsiloxane selbst in denjenigen Reaktionsmatrices gewährleistet, die erfahrungsgemäß bewährte Edelmetallkatalysatoren nicht ausreichend stabilisieren.

Für den Fachmann nicht vorhersehbar war die Beobachtung, daß sich aus der Kombination dieser Edelmetallverbindungen eine katalytische Aktivität definiert, die sich weder aus dem isoliert betrachteten Einfluß von Komponente A, noch aus dem für sich betrachteten Einfluß der Komponente B herleiten läßt.

Hexachloroplatinsäure H₂PtCl₆ als alleiniger Katalysator führt zwar zu hohen SiH-Endumsätzen, provoziert aber Reaktandkumulationen, die zu heftigen Spontanreaktionen führen (Beispiel 1). Ruthenium(III)chlorid-Hydrat ist für sich betrachtet in diesen Reaktionssystemen kein überzeugender Katalysator (Beispiel 2). Ähnlich schwach ist die Wirkung von Rhodium(III)chlorid-Hydrat als Katalysator bei dieser Reaktion.

Die hier gefundene, durch ihre Kombination überhöhte katalytische Effizienz mehrerer Einzelkomponenten läßt sich daher mit dem Begriff einer synergistischen Wechselwirkung beschreiben.

Eine Kombination, die z. B. aus metalläquivalenten Anteilen H₂PtCl₆ und RuCl₃ x nH₂O besteht, erlaubt es, den Reaktionsverlauf bei der Umsetzung hochkonzentrierter SiH-haltiger Systeme allein durch die Zudosiergeschwindigkeit weiterer Reaktanden zu bestimmen.

In einer modifizierten Ausführungsform vorliegender Erfindung ist es auch möglich, die beiden Katalysatorkomponenten nacheinander in eine sequenziert-gestaltete Anlagerungsreaktion einzubringen (Beispiel 4).

### Beispiel 1 (nicht erfindungsgemäß)

In einem mit Argon inertisierten 500-ml-Vierhalskolben, ausgerüstet mit KPG-Rührer, Tropftrichter, Innenthermometer und Rückflußkühler wurden 100,0 g Poly(methylwasserstoff)siloxan (SiH-Gehalt: 16,16 val/kg) zusammen mit 9,6 g α-Methylstyrol (5 val-%) vorgelegt und auf 80 °C erwärmt. Bei dieser Temperatur wurden 170 µl einer 10 %-igen Lösung von Hexachloroplatinsäure in Isopropanol zugegeben.

Beobachtet wurde eine Aggregation des Katalysators in Form schwarzer Fäden im Bereich des von der Reaktionsmischung umspülten Thermometers. Die freiwerdende Reaktionswärme ließ die Temperatur auf 98 °C steigen. Nach Abklingen der Exothermie wurde der Ansatz auf 125 °C erhitzt und 47,7 g α-Methylstyrol (25 val-%) innerhalb einer Stunde zugetropft.

Ausbleibende Wärmetönung während dieser Reaktionsphase indizierte die Akkumulation nicht abreagierter Reaktanden. Nach beendeter Zugabe wurde versucht, der mangelnden Reaktionsbereitschaft durch sukzessives Anheben der Temperatur auf 140 °C entgegenzuwirken. Dann wurde der Ansatz auf 125 °C abgekühlt und 195,8 g (70 val-% + 5 m-% Überschuß) 1-Dodecen zugetropft, wobei die dann während der Zugabe heftig und spontan einsetzende Reaktion den Einsatz einer Hilfskühlung notwendig machte, so daß die Reaktionstemperatur nicht über 142 °C stieg.

Dauer der Zugabe: 45 Minuten

Nach einer Stunde Nachreaktion betrug der gasvolumetrisch ermittelte SiH-Umsatz 95,3 %.

### Beispiel 2 ( nicht erfindungsgemäß):

Analog Beispiel 1 wurden in einem 500 ml Vierhalskolben 100 g Poly(methylwasserstoff)siloxan mit einem SiH-Gehalt von 16,16 val/kg, 9,6 g α-Methylstyrol (5 mol-%) vorgelegt und mit 7,36 mg RuCl₃ x 4 H₂O (15 ppm Ru gelöst in 2 ml Isopropanol) versetzt. Diese Mischung wurde auf 140 °C erhitzt. Bei dieser Temperatur wurde die restliche Menge α-Methylstyrols (47,7 g entspr. 25 val-%) zugegeben, wobei eine stete Gasentwicklung zu beobachten war. Nach beendigter Zugabe sank die Temperatur auf 136 °C, wodurch auch die Gasentwicklung zum Erliegen kam.

Anschließend wurde bei 140 °C 1-Dodecen zugetropft. Um die vorgegebene Temperatur zu halten (keine Exothermie), mußte der Ansatz während des Zutropfens kontinuierlich erwärmt werden.

Nach zwei Stunden Nachreaktionszeit wurde mit Hilfe der Gasvolumetrie ein SiH-Umsatz von nur 22,05 % bestimmt.

### Beispiel 3

In Analogie zu Beispiel 2 wurden 100 g Poly(methylwasserstoff)-siloxan (SiH-Gehalt: 16,16 val/kg) mit 5 val-% α-Methylstyrol (9,6 g) in einem inertisierten Kolben vorgelegt, anschließend mit einer isopropanolischen Lösung von RuCl₃ x 4H₂O (9,8 mg entspr. 10 ppm Ru) gemeinsam mit 124 µl H₂PtCl₆ entspr. 10 ppm Pt (10 %-ig in Isopropanol) versetzt.

Die rotbraun-gefärbte Mischung schäumte sofort und zeigte geringe Gasentwicklung.

Gelindes Erwärmen auf 30 °C verursachte eine Exothermie mit Temperaturanstieg bis auf 45 °C. Bei weiterem Erwärmen durchlief der Ansatz die Farben dunkelgrün und blau.

Bei 80 °C wurde restliches α-Methylstyrol (47,70 g) zugetropft. Während der Zugabe stieg die Temperatur bis auf 100 °C. Die permanente Aktivität des Katalysators gestattete es, allein durch Variation der Zutropfgeschwindigkeit die Reaktionstemperatur zu steuern. Nach beendeter Zugabe wurde die Temperatur nochmals um 5-10 °C erhöht, um die vollständige Anlagerung von α-Methylstyrol sicherzustellen (Zutropfdauer ca. 30 min).

Nach einer 10-minütigen Nachreaktionsphase wurden bei ca. 110 °C 195,8 g 1-Dodecen zugegeben. Im Verlauf der weiteren Zugabe (1 Stunde) wurde die Temperatur sukzessive auf 140 °C angehoben. Der gasvolumetrisch ermittelte SiH-Umsatz betrug bei Zutropfende 98,1 %.

### Beispiel 4:

100,0 g Methylhydrogenpolysiloxan (SiH-Gehalt 16,16 val/kg) wurden analog Beispiel 3 gemeinsam mit 9,6 g α-Methylstyrol und 9,8 mg RuCl₃ x 4H₂O (entspr. 10 ppm Ru gelöst in 2 ml Isopropanol) unter Ar-Inertisierung vorgelegt und auf 50 °C erhitzt. Bei ca. 35 °C setzte ein Farbenspiel ein, das von Rotbraun über Gelb nach Grün und schließlich nach Blau führte. Bei 50 °C führte die freiwerdende Reaktionswärme zu einem Temperaturanstieg auf 75 °C, wobei sich der Ansatz fast vollständig entfärbte.

Nach Abklingen der Exothermie wurde der Ansatz auf ca. 22 °C heruntergekühlt und dann mit 124 µl einer 10 %-igen Hexachloroplatinsäurelösung in Isopropanol (entspr. 10 ppm Pt) versetzt. Dabei setzte ein sofortiges Gasen ein. Innerhalb von zehn Minuten und bei 40 °C wurden zunächst 47,7 g α-Methylstyrol zudosiert. Die abschließende Hydrosilylierung mit 195,8 g 1-Dodecen erfolgte binnen 40 Minuten bei Reaktionstemperaturen ≤ 110 °C.

Der gasvolumetrisch bestimmte SiH-Umsatz lag bereits am Zutropfende bei 96,3 %.

## Patentansprüche

1. Verfahren zur übergangsmetallkatalysierten Anlagerung von SiH-Gruppen tragenden Polysiloxanen an olefinische Verbindungen, **dadurch gekennzeichnet, daß** als Katalysator eine Kombination aus einer Platin- und einer Rutheniumverbindung eingesetzt wird.

2. Verfahren gemäß Anspruch 1, **dadurch gekennzeichnet, daß** der Katalysator aus H₂PtCl₆ und RuCl₃ x nH₂O besteht.

3. Synergistisches Katalysatorsystem, zur übergangsmetallkatalysierten Anlagerung von SiH-Gruppen tragenden Polysiloxanen an olefinische Verbindungen bestehend aus einer Platin- und einer Rutheniumverbindung.

## Claims

1. Process for the transition metal-catalysed addition of SiH-containing polysiloxanes onto olefinic compounds, **characterized in that** the catalyst used is a combination of a platinum compound and ruthenium compound.

2. Process according to Claim 1, **characterized in that** the catalyst comprises H₂PtCl₆ and RuCl₃ × nH₂O.

3. Synergistic catalyst system for the transition metal-catalysed addition of SiH-containing polysiloxanes onto olefinic compounds, comprising and a ruthenium compound.

## Revendications

1. Procédé pour l'addition catalysée par des métaux de transition de polysiloxanes portant des groupes SiH sur des composés oléfiniques, **caractérisé en ce qu'**on utilise comme catalyseur une combinaison d'un composé de platine et d'un composé de ruthénium.

2. Procédé selon la revendication 1, **caractérisé en ce que** le catalyseur est constitué par H₂PtCl₆ et RuCl₃ x nH₂O.

3. Système de catalyseur synergique pour l'addition catalysée par des métaux de transition de polysiloxanes portant des groupes SiH sur des composés oléfiniques, constitué par un composé de platine et un composé de ruthénium.
